# EUROPEAN PATENT APPLICATION

(11) **EP 4 644 910 A1**
(43) Date of publication of application: **05.11.2025**
(21) Application number: 23911634.6
(22) Date of filing: 08.12.2023
(51) Int. Cl.: G01N 35/02, G01N 35/04

(54) **SPECIMEN CONTAINER SORTING DEVICE**

(30) Priority: 27.12.2022 JP 2022210589
(71) Applicant: HITACHI HIGH-TECH CORPORATION, Tokyo 105-6409 (JP)
(72) Inventor: SHIBATA Toru, Tokyo 100-8280 (JP); MITSUYAMA Toshifumi, Tokyo 100-8280 (JP); TOMIYAMA Tomoko, Tokyo 105-6409 (JP); FUNATSU Terunobu, Tokyo 105-6409 (JP)
(74) Representative: Mewburn Ellis LLP
(86) International application number: PCT/JP2023/044024
(87) International publication number: WO 2024/142853

(57) **Abstract**

An object of the present invention is to provide a sample container sorting device capable of sorting sample containers in a short time. Therefore, a sample container sorting device according to the present invention includes a container holding/lifting unit that holds a sample container containing a sample and moves the sample container in a vertical direction, a transport unit that moves the container holding/lifting unit in a horizontal direction, a container identification unit that identifies an attribute of the sample container, and a control unit that controls the container holding/lifting unit, the transport unit, and the container identification unit, and that sorts a plurality of the sample containers from a first rack in which the sample containers having different attributes are mixed to different second racks for each attribute, in which the control unit causes the container identification unit to identify attributes of the plurality of sample containers in a state where the plurality of sample containers are held by the container holding/lifting unit.

## Description

### Technical Field

The present invention relates to a sample container sorting device.

### Background Art

In clinical testing at a hospital or a laboratory, a large number of collected samples are sorted by test type such as a blood test, a biochemical test, or a general test, and necessary preprocessing such as centrifugation or uncapping is performed according to the type, and then a final target test is performed. In such clinical testing at a hospital or laboratory, it is important to process and examine the collected samples quickly and accurately. Conventionally, a color, a shape, and the like of a cap of a sample container are distinguished for each test type of a sample, and the sample container is manually sorted for each test type based on the distinction to perform necessary processing. However, automation of sorting work of the samples is needed to improve efficiency.

As a technique for automatically sorting samples by test type, for example, PTL 1 discloses a sorting device including a sorting unit that receives and transports a rack on which a plurality of containers are placed and transfers the containers placed on the rack to a predetermined container placement unit (claim 1 in PTL 1).

### Citation List

### Patent Literature

PTL 1: JP 2013-140141 A

### Summary of Invention

### Technical Problem

However, in the technique described in PTL 1, the rack is once transported to a predetermined place, and the containers are removed one by one and inserted into the sorting destinations one by one based on the sorting conditions read from the barcodes of the containers at that time, so that the sorting work takes time.

An object of the present invention is to provide a sample container sorting device capable of sorting sample containers in a short time.

### Solution to Problem

In order to achieve the above object, a sample container sorting device according to the present invention includes a container holding/lifting unit that holds a sample container containing a sample and moves the sample container in a vertical direction, a transport unit that moves the container holding/lifting unit in a horizontal direction, a container identification unit that identifies an attribute of the sample container, and a control unit that controls the container holding/lifting unit, the transport unit, and the container identification unit, and that sorts a plurality of the sample containers from a first rack in which the sample containers having different attributes are mixed to different second racks for each attribute, in which the control unit causes the container identification unit to identify attributes of the plurality of sample containers in a state where the plurality of sample containers are held by the container holding/lifting unit.

### Advantageous Effects of Invention

According to the present invention, a sample container sorting device capable of sorting sample containers in a short time can be provided.

### Brief Description of Drawings

[FIG. 1] FIG. 1 is a perspective view illustrating a configuration of a sample container sorting device according to an embodiment of the present invention.
[FIG. 2] FIG. 2 is a top view illustrating an operation of a transport unit in a case of sorting sample containers.
[FIG. 3] FIG. 3 is a perspective view illustrating a state in which drawers that support trays of the sample container sorting device according to the embodiment of the present invention are pulled out.
[FIG. 4] FIG. 4 is a side view illustrating a state in which each of holding/lifting mechanisms independently holds the sample container.
[FIG. 5] FIG. 5 is a side view illustrating an example of a case where spacing of the sample containers is smaller than a minimum interval of the holding/lifting mechanisms.
[FIG. 6] FIG. 6 is a plan view illustrating an example of the sample containers held in each sorting cycle in a case where the plurality of sample containers in a pre-sorting rack are sorted by the holding/lifting mechanisms of FIG. 5.
[FIG. 7] FIG. 7 is a perspective view illustrating a positional relationship between a container identification unit and a container holding/lifting unit at an identification position.
[FIG. 8] FIG. 8 is a side view illustrating a state in which the container identification unit collectively identifies barcodes attached to the sample containers.
[FIG. 9] FIG. 9 is a side view illustrating a state of collectively detecting liquid amounts of samples contained in the sample containers.
[FIG. 10] FIG. 10 is a perspective view illustrating an overall configuration of the holding/lifting mechanism according to the embodiment of the present invention.
[FIG. 11] FIG. 11 is a cross-sectional view illustrating a main part of the holding/lifting mechanism according to the embodiment of the present invention.

### Description of Embodiments

Hereinafter, an embodiment of the present invention will be described with reference to the drawings. Note that the present invention is not to be understood as being limited to the description of the embodiment described below. Those skilled in the art can easily understand that the specific configuration can be changed without departing from the spirit or gist of the present invention.

In the configuration of the invention described below, the same reference numerals are commonly used for the same portions or portions having similar functions in different drawings, and redundant description may be omitted. In addition, the position, size, shape, range, and the like of each configuration illustrated in the drawings and the like are given to facilitate understanding of the invention and may not represent the actual position, size, shape, range, and the like. Therefore, the present invention is not necessarily limited to the position, size, shape, range, and the like described in the drawings and the like.

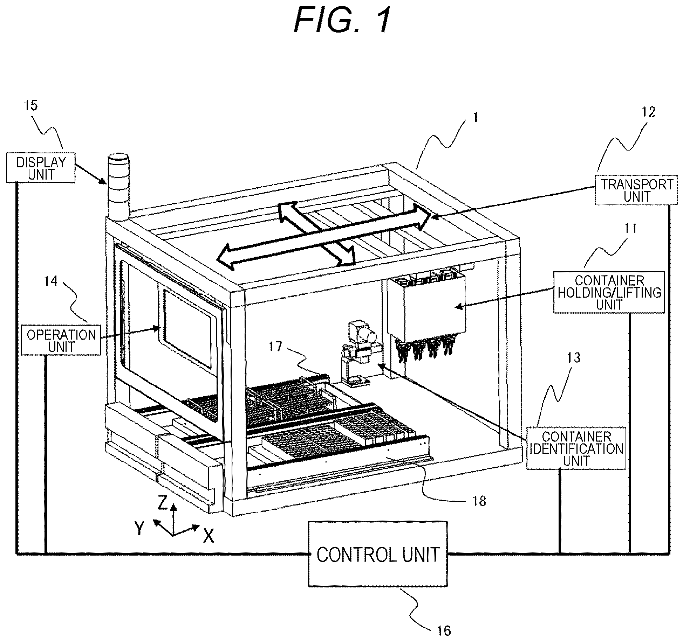

FIG. 1 is a perspective view illustrating a configuration of a sample container sorting device according to an embodiment of the present invention. As illustrated in FIG. 1, a sample container sorting device 1 mainly includes a container holding/lifting unit 11, a transport unit 12, a container identification unit 13, an operation unit 14, a display unit 15, and a control unit 16. The container holding/lifting unit 11 holes a sample container containing a sample and moves the sample container in the vertical direction, and is attached to the transport unit 12. The container holding/lifting unit 11 has a plurality of (for example, four) holding/lifting mechanisms, can simultaneously hold and lift the plurality of sample containers 20, and can improve the processing speed. The transport unit 12 moves the container holding/lifting unit 11 in the horizontal direction (the xy directions in FIG. 1), and is provided on a ceiling surface of a housing of the sample container sorting device 1. The container identification unit 13 identifies an attribute of the sample container 20 (the test type and the test item for the sample contained in the sample container 20), and is, for example, a camera that captures an image of the sample container 20. The operation unit 14 is used by an operator to input settings and the like of the sample container sorting device 1, and is provided on a front surface of the housing of the sample container sorting device 1. The display unit 15 is for displaying an operation status of the sample container sorting device 1, and is provided at an upper portion of the housing of the sample container sorting device 1. The control unit 16 controls the container holding/lifting unit 11, the transport unit 12, the container identification unit 13, the operation unit 14, and the display unit 15.

The sample container sorting device 1 further includes, on a bottom surface in the housing, a pre-sorting tray 17 (a first tray) on which a plurality of pre-sorting racks 170 are installed, and a post-sorting tray 18 (a second tray) on which a plurality of post-sorting racks 180 are installed. The control unit 16 controls the container holding/lifting unit 11, the transport unit 12, and the like to sort the sample containers 20 from the pre-sorting racks 170 in which the sample containers 20 having different attributes are mixed into different post-sorting racks 180 each stores a certain attribute.

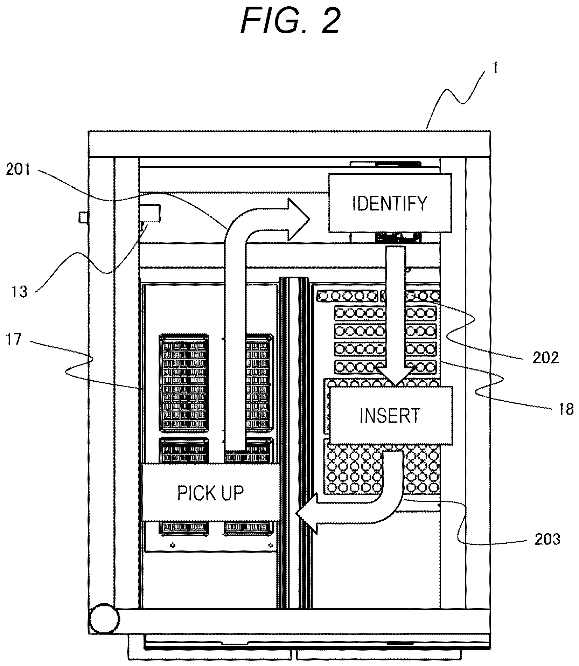

FIG. 2 is a top view illustrating an operation of the transport unit in a case of sorting the sample containers. First, the transport unit 12 horizontally moves the container holding/lifting unit 11 on the vertical projection of the pre-sorting rack 170 installed on the pre-sorting tray 17, from which the sample containers are to be picked up. Next, when the holding/lifting mechanism of the container holding/lifting unit 11 is lowered to hold the sample containers 20 and then lifted, the transport unit 12 horizontally moves the container holding/lifting unit 11 to an identification position as indicated by the arrow 201 in FIG. 2.

At this time, the control unit 16 causes the container identification unit 13 (camera) to identify the attributes of the plurality of sample containers 20 as sorting destinations at one time in a state where the plurality of sample containers 20 are held by the container holding/lifting unit 11, so that the processing time can be shortened. When the attribute of the sample container 20 is identified, for example, the color or shape of the lid of the sample container 20 included in the image captured by the camera is extracted, and the attribute of the sample container 20 is specified by comparing the extraction result with a predetermined attribute table.

Note that the image analysis processing may be executed in the camera or may be executed in the control unit 16.

When the attribute of the sample container 20 is identified, since the post-sorting rack 180 corresponding to the certain attribute is specified, the transport unit 12 horizontally moves the container holding/lifting unit 11 on the vertical projection of the post-sorting rack 180, as an inserting target, installed in the post-sorting tray 18 as indicated by the arrow 202 in FIG. 2. Note that, in a case where the plurality of sample containers 20 held by the container holding/lifting unit 11 have different attributes, the order of the sample containers 20 to be moved to the post-sorting racks 180 is appropriately determined, for example, in the order of the post-sorting racks 180 close to the identification position.

Next, the holding/lifting mechanism that holds the sample container 20 having the certain attribute independently lowers and inserts the sample container 20 into the post-sorting rack 180, releases the holding, and then raises. Here, in a case where the container holding/lifting unit 11 still holds the sample containers 20 having different attributes, the container holding/lifting unit 11 horizontally moves on the vertical projection of the post-sorting rack 180 corresponding to the attribute, and then inserts the sample containers 20. When all of the plurality of sample containers 20 held by the container holding/lifting unit 11 are inserted into the post-sorting racks 180, the transport unit 12 horizontally moves the container holding/lifting unit 11 on the vertical projection of the next sample containers 20 to be picked up as indicated by the arrow 203 in FIG. 2.

The operation described above is repeated until the sample containers 20 in all the pre-sorting racks 170 installed in the pre-sorting tray 17 are picked up or until any one of the post-sorting racks 180 installed in the post-sorting tray 18 becomes full. In the former case, that is, when all the pre-sorting racks 170 become empty, the operator replaces the pre-sorting racks 170 with new pre-sorting racks 170 in which the sample containers 20 are placed, and then operates the operation unit 14 to restart the sorting operation. In the latter case, that is, when any one of the post-sorting racks 180 becomes full, the operator replaces the post-sorting racks 180 with other empty post-sorting racks 180, and then operates the operation unit 14 to restart the sorting operation.

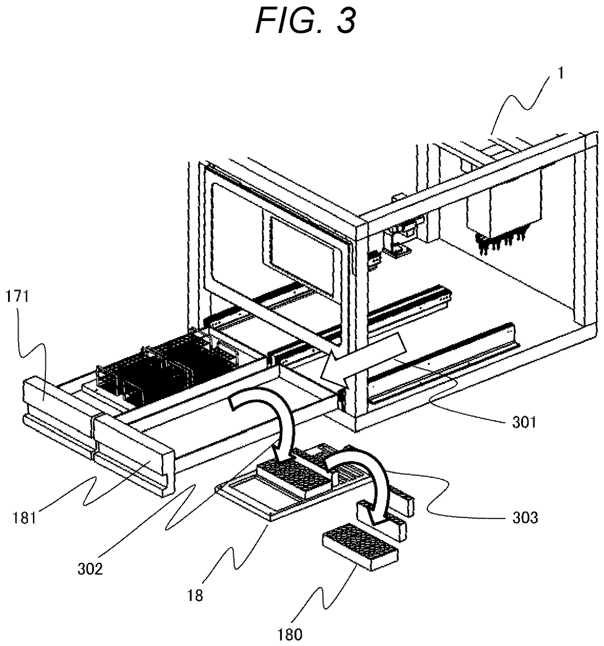

FIG. 3 is a perspective view illustrating a state in which drawers that support the trays of the sample container sorting device according to the embodiment of the present invention are pulled out. The pre-sorting tray 17 is supported by a pre-sorting drawer 171, and the post-sorting tray 18 is supported by a post-sorting drawer 181. Hereinafter, the configuration of the post-sorting tray 18 will be described as an example, but the same applies to the pre-sorting tray 17.

The post-sorting drawer 181 can be pulled out from the lower portion of the sample container sorting device 1 in the front surface side as indicated by the arrow 301 in FIG. 3. Further, the post-sorting tray 18 can be removed from the post-sorting drawer 181 as indicated by the arrow 302 in FIG. 3. Further, the post-sorting racks 180 can be removed from the post-sorting tray 18 as indicated by the arrow 303 in FIG. 3. Note that the post-sorting racks 180 can be removed from the post-sorting tray 18 even when the post-sorting tray 18 is being supported by the post-sorting drawer 181.

Here, on an upper surface of the bottom of the post-sorting tray 18, a rack installation portion corresponding to the shape and size of the post-sorting racks 180 is formed with grooves, partitions, or the like, and the post-sorting racks 180 are positioned with respect to the post-sorting tray 18. In a case where a user including the operator desires to use the post-sorting rack 180 that does not correspond to the shape or size of the rack installation portion of the current post-sorting tray 18, another post-sorting tray 18 having a different rack installation portion is prepared and replaced with the current tray. However, in a case where the post-sorting tray 18 is replaced, that is, in a case where the post-sorting racks 180 are changed to desired post-sorting racks, the operator inputs the number of racks, the spacing, the reference coordinate, and the like as the position information of the post-sorting racks 180 using the operation unit 14. In a case where the operator inputs the position information, the control unit 16 automatically changes the position information of the sorting destination of the sample containers 20. As described above, the sample container sorting device 1 according to the present embodiment can use desired racks according to an inspection facility such as a hospital only by replacing the tray and registering the position information of the racks, and thus, the versatility is high.

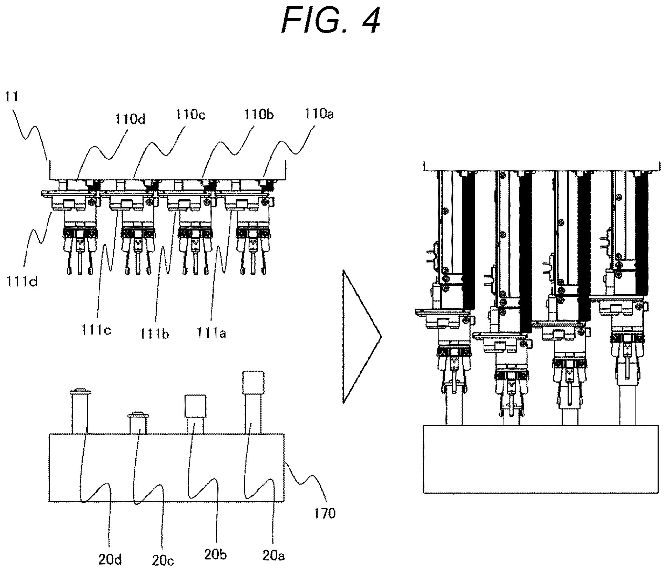

In addition, the container holding/lifting unit 11 according to the present embodiment includes a plurality of holding/lifting mechanisms 110a to 110d, and the mechanisms can be operated independently. For this reason, there is an advantage that the processing speed is improved by holding and transporting the sample containers 20 at once, and even in a case where failure is found in some of the holding/lifting mechanisms, the sorting operation can be continued using other holding/lifting mechanisms to hold and transport the sample containers 20, and maintenance can be performed at an arbitrary timing. Hereinafter, a method of holding the plurality of sample containers 20 will be specifically described with reference to FIGS. 4 to 6.

FIG. 4 is a side view illustrating a state in which each of the holding/lifting mechanisms independently holds the sample container. Each of the holding/lifting mechanisms 110a to 110d of the container holding/lifting unit 11 includes an independent Z-axis moving mechanism, determines the movement amount according to the height of sample containers 20a to 20d installed in the pre-sorting racks 170, and holds each sample container. Each of the holding/lifting mechanisms 110a to 110d includes distance measurement units 111a to 111d, respectively, and can measure the distance to each of the sample containers 20a to 20d when being at the holding standby position on the vertical projection of the sample containers. In addition, in a case where the sample container 20 does not have a lid, the presence or absence of the sample in the sample container 20 can also be determined by the distance measurement units, and the sample container 20 not containing any sample may not be sorted. In addition, the distance measurement units 111a to 111d can also confirm whether the sample containers 20 have been held by the holding/lifting mechanisms. In a case where the holding fails, a retry operation may be executed until the target sample container 20 is successfully held. However, since the holding failure may be caused by the installation state of the sample container 20, the retry operation may be executed so that another sample container 20 is held first.

In addition, as illustrated in FIG. 4, in a case where the spacing of the sample containers 20 in the pre-sorting rack 170 coincides with the interval between the respective holding/lifting mechanisms, the holding/lifting mechanisms 110a to 110d can hold the sample containers 20a to 20d at once, and a high processing speed can be realized. Therefore, it is desirable that the installation intervals of the holding/lifting mechanisms 110a to 110d are adjusted in advance in accordance with the pre-sorting racks 170 used in the inspection facility. Note that the adjustment of the installation intervals of the holding/lifting mechanisms may be manually performed by the operator, or may be automatically performed by the control unit 16 by the operator inputting the spacing or the like of the sample containers 20 through the operation unit 14. In addition, a camera for monitoring the spacing of the sample containers 20 in the pre-sorting rack 170 may be separately provided in the sample container sorting device 1 so that the control unit 16 can automatically adjust the pitch based on the captured image.

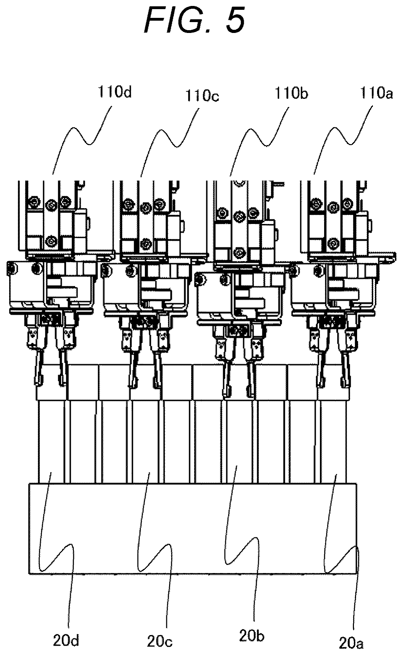

FIG. 5 is a side view illustrating an example of a case where the spacing of the sample containers is smaller than a minimum intervals of the holding/lifting mechanisms. In a case where the spacing of the sample containers is smaller than the minimum intervals of the holding/lifting mechanisms, the intervals of the holding/lifting mechanisms are desirably set to an integral multiple of the spacing of the sample containers. FIG. 5 illustrates that by setting the intervals between the holding/lifting mechanisms 110a to 110d to be three times the spacing of the sample containers 20a to 20d, the respective holding/lifting mechanisms can hold some sample containers at once by skipping two containers therebetween. With this configuration, even for a pre-sorting rack having a small spacing of sample containers, it is possible to hold the plurality of sample containers at once and efficiently transport the containers, and to improve the processing speed.

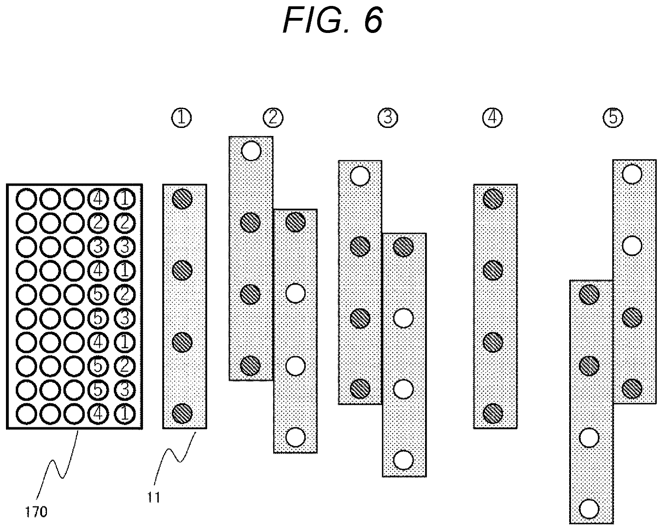

FIG. 6 is a plan view illustrating an example of the sample containers held in each sorting cycle in a case where the plurality of sample containers in the pre-sorting rack are sorted by the holding/lifting mechanisms of FIG. 5. The sorting cycle means one of the cycles in which picking up, identifying, and inserting are repeated in this order as illustrated in FIG. 2. The numbers in FIG. 6 indicate the orders in the sorting cycle.

From the viewpoint of improving the processing speed, in a case where the container holding/lifting unit 11 is located at the identification position, it is desirable that all the holding/lifting mechanisms are holding the sample containers 20 as possible. In the example of FIG. 6, in any of the sorting cycles of (1) to (5), all the four holding/lifting mechanisms are brought into a state of holding the sample containers 20 by at least two lifting operations.

In the example of FIG. 6, a pre-sorting rack 170 of a type in which ten sample containers 20 can be installed in five rows is used. On the other hand, as described above, the container holding/lifting unit has four holding/lifting mechanisms at installation intervals of three times the spacing of the sample containers 20 installed in the pre-sorting rack 170. Therefore, according to the present embodiment, the first two rows of the pre-sorting rack 170 are first sorted by setting a set of "20" that is the least common multiple of "10", which is the number of sample containers in each row, and "4", which is the number of holding/lifting mechanisms.

First, in the cycle (1), four sample containers among the ten sample containers in the first row are held at once in one lifting operation. Next, in the cycle (2), three of the sample containers remained in the first row are held at once in the first lifting operation, and one sample container among the ten sample containers in the second row is held in the second lifting operation. Further, in the cycle (3), the three sample containers remained in the first row are held at once in the first lifting operation, and one sample container remaining in the second row is held in the second lifting operation. In the cycle (4), the four sample containers remained in the second row are held at once in one lifting operation. Finally, in the cycle (5), two of the sample containers remained in the second row are held at once in the first lifting operation, and the two sample containers remained in the second row are held at once in the second lifting operation.

According to the sequence described above, it is possible to efficiently sort the first two rows of 20 sample containers in the pre-sorting rack 170 by a total of eight lifting operations. Note that the above-described sequence is merely an example, and the sequence is appropriately determined according to the type of the pre-sorting rack 170, the number of holding/lifting mechanisms, and the like.

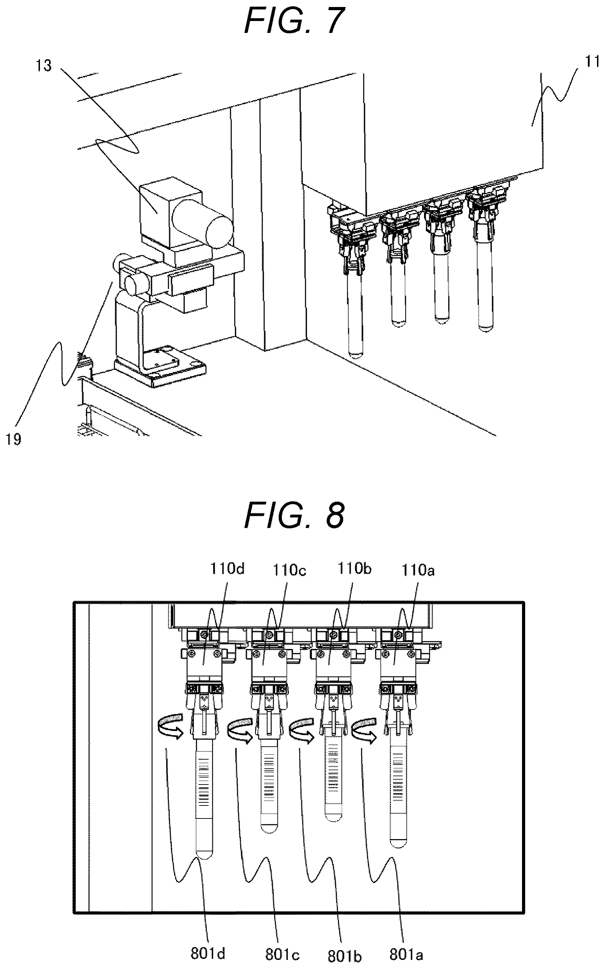

FIG. 7 is a perspective view illustrating a positional relationship between the container identification unit and the container holding/lifting unit at the identification position. As described above, when the container holding/lifting unit 11 is located at the identification position, basically all the holding/lifting mechanisms are in a state of holding the sample containers 20. Therefore, in order to identify the attributes of the plurality of sample containers 20 at a time, all of the plurality of sample containers 20 need to be included in the image captured by the camera (the container identification unit 13). Therefore, the control unit 16 according to the present embodiment controls the transport unit 12 such that the plurality of holding/lifting mechanisms are arranged in a line in a direction perpendicular to the photographing direction of the camera at the identification position. In order to maintain preferred photographing accuracy by the camera, it is desirable to stop the transport unit 12 at the identification position. In addition, the row of the plurality of holding/lifting mechanisms may not be a strict right angle with respect to the photographing direction of the camera, and may have a deviation (for example, ±3°) of a certain angle from the right angle. The position adjustment of the container holding/lifting unit 11 with respect to the container identification unit 13 is basically performed by the control unit 16 controlling the transport unit 12, but may be performed by the control unit 16 controlling an identification unit position adjustment mechanism 19 to which the container identification unit 13 is fixed as illustrated in FIG. 7.

FIG. 8 is a side view illustrating a state in which the container identification unit collectively identifies barcodes attached to the sample containers. The holding/lifting mechanisms 110a to 110d of the container holding/lifting unit 11 include independent rotation mechanisms, and can rotate the held sample containers 20 as indicated by the arrows 801a to 801d in FIG. 8. In a case where the container holding/lifting unit 11 is at the identification position, the control unit 16 may rotate the sample containers 20 by controlling the respective holding/lifting mechanisms, and identify the attributes of the sample containers based on the barcode information of each sample container photographed by the camera at that time. Here, before identifying the barcode information, the attribute of the sample container is identified by the color of the lid of the sample container or the shape of the sample container. Therefore, in a case where the identification result based on the barcode does not match the identification result based on the color of the lid or the like of the sample container, the control unit 16 can also output an error to the display unit 15 or the like. By double checking the identification based on the color of the lid or the like of the sample container and the identification based on the barcode, a sample collected into a wrong sample container, an incorrectly attached barcode, and the like can be found, and the accuracy of sorting is improved.

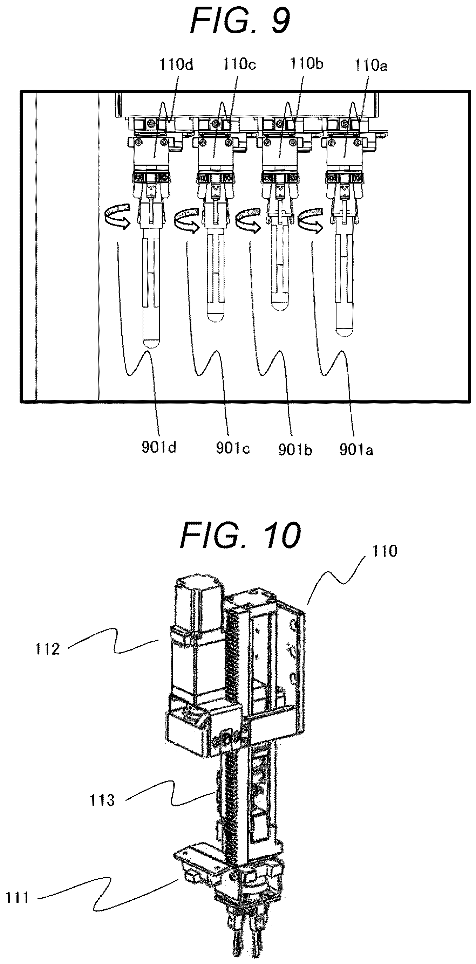

FIG. 9 is a side view illustrating a state of collectively detecting liquid amounts of the samples contained in the sample containers.

In a case where the control unit 16 rotates the sample containers 20 and identifies the barcode information based on the image captured by the camera, the sample containers 20 are further rotated by the holding/lifting mechanisms 110a to 110d at a predetermined angle from the time when the barcode information is identified, as indicated by the arrows 901a to 901d in FIG. 9. Then, a side of each sample container 20 other than the side to which the barcode is attached is positioned in front of the camera.

At this time, the control unit 16 detects the liquid amounts of the samples based on the image of the sample containers 20 captured by the camera. As a method of detecting the liquid amount, a conceivable method is to extract the height of a border line seen through a gap between the edges of the barcode from the captured image and then calculate the liquid amount in consideration of length information of the sample container determined by the attribute of the sample container. Note that the predetermined angle described above is appropriately set depending on the region to which the barcode is attached, and is, for example, half rotation. In a case where the detected liquid amount is not within an appropriate range, the control unit 16 can also output an error to the display unit 15 or the like.

In addition, the control unit 16 may detect a holding state of the sample container 20 (for example, inclination of the sample container) by the holding/lifting mechanism based on the image captured by the camera, and output an error in a case where the sample container 20 is not correctly held. In addition, in a case where the sample container 20 is not correctly held, there is a possibility that the sample container 20 cannot be correctly inserted into the post-sorting rack 180. Therefore, the sorting destination may be a box-like shape without regulation, not a rack whose insertion place is regulated by a hole or the like.

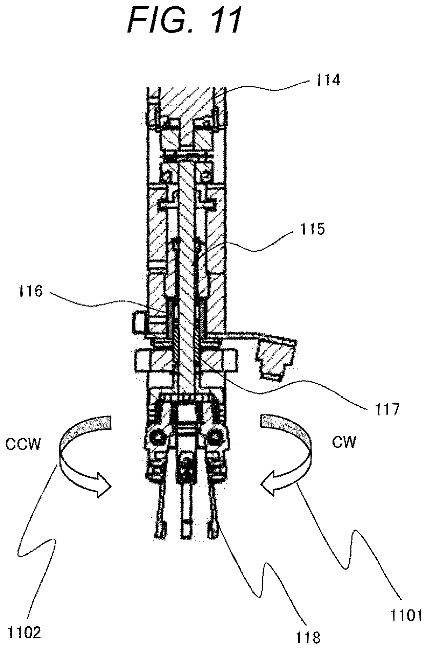

Next, a structure of the holding/lifting mechanism 110 according to the present embodiment will be described with reference to FIGS. 10 and 11.

FIG. 10 is a perspective view illustrating an overall configuration of the holding/lifting mechanism according to the embodiment of the present invention. As illustrated in FIG. 10, the holding/lifting mechanism 110 includes a Z-axis moving mechanism 113, and is driven in the Z-axis direction (the vertical direction) by a first drive source 112. The first drive source 112 includes a brake and does not operate in a case where the power source is turned off. With this configuration, the sample container can be held at a predetermined height without being dropped even in a case of a power failure or an emergency stop. The holding/lifting mechanism 110 includes the distance measurement unit 111 and can measure the height of the sample container.

FIG. 11 is a cross-sectional view illustrating a main part of the holding/lifting mechanism according to the embodiment of the present invention. As illustrated in FIG. 11, in the holding/lifting mechanism 110 according to the present embodiment, power from a second drive source 114 is transmitted to an opening/closing operation of claws 118 via a drive shaft 115. The claws 118 are opened and closed by a cam structure and closed by a spring force. In the holding/lifting mechanism 110, a first one-way clutch 116 and a second one-way clutch 117 are disposed in a dual structure with respect to the drive shaft 115. In other words, the first one-way clutch 116 is attached to the drive shaft 115 to lock the CCW direction, and the second one-way clutch 117 is attached to the drive shaft 115 to lock the CW direction. With this configuration, in a case where the drive shaft 115 rotates in the CW direction 1101, the rotation of the drive shaft 115 is transmitted to the first one-way clutch 116 and rotation is performed between the second one-way clutch 117 so that the sample container can be rotated while maintaining the holding state without rotating the cam. On the other hand, in a cases where the drive shaft 115 rotates in the CCW direction 1102, only the drive shaft 115 rotates, so that the claws 118 is opened and closed by the cam structure. At this time, the transmission force of the rotation of the first one-way clutch 116 received from the drive shaft 115 can be stopped by locking the second one-way clutch 117.

As described above, since the holding/lifting mechanism 110 according to the present embodiment can execute the operation of holding and releasing the sample containers, that is, the opening and closing operation of the claws 118 and the rotating operation of the held sample containers by the same second drive source 114, downsizing can be achieved.

### Reference Signs List

- 1: sample container sorting device
- 11: container holding/lifting unit
- 12: transport unit
- 13: container identification unit
- 14: operation unit
- 15: display unit
- 16: control unit
- 17: pre-sorting tray
- 18: post-sorting tray
- 19: identification unit position adjustment mechanism
- 20, 20a to 20d: sample container
- 110, 110a to 110d: holding/lifting mechanism
- 111, 111a to 111d: distance measurement unit
- 112: first drive source
- 113: Z-axis moving mechanism
- 114: second drive source
- 115: drive shaft
- 116: first one-way clutch
- 117: second one-way clutch
- 118: claw
- 170: pre-sorting rack
- 171: pre-sorting drawer
- 180: post-sorting rack
- 181: post-sorting drawer

## Claims

1. A sample container sorting device that comprises:
a container holding/lifting unit that holds a sample container containing a sample and moves the sample container in a vertical direction;
a transport unit that moves the container holding/lifting unit in a horizontal direction;
a container identification unit that identifies an attribute of the sample container; and
a control unit that controls the container holding/lifting unit, the transport unit, and the container identification unit, and
that sorts a plurality of the sample containers from a first rack in which the sample containers having different attributes are mixed to different second racks for each attribute, wherein
the control unit causes the container identification unit to identify attributes of the plurality of sample containers in a state where the plurality of sample containers are held by the container holding/lifting unit.

2. The sample container sorting device according to claim 1, wherein
the container holding/lifting unit includes a plurality of independent holding/lifting mechanisms, and
the control unit
controls the transport unit to horizontally move the container holding/lifting unit onto a vertical projection of the second rack corresponding to the attribute identified by the container identification unit, and then
controls the holding/lifting mechanisms to independently lower the sample container identified by the container identification unit and insert the sample container into the second rack.

3. The sample container sorting device according to claim 1, further comprising:
a tray on which a rack installation portion corresponding to a shape and a size of the first rack or the second rack is formed; and
a drawer that supports the tray, wherein
the tray is replaceable with a tray having a different rack installation portion.

4. The sample container sorting device according to claim 3, wherein in a case where the tray is replaced, the control unit changes position information of the first rack or the second rack.

5. The sample container sorting device according to claim 2, wherein
the container identification unit is a camera that captures an image of the sample container, and
the control unit causes the container identification unit to identify attributes of the plurality of sample containers in a state where the plurality of holding/lifting mechanisms are positioned in a line in a direction perpendicular to a photographing direction of the camera.

6. The sample container sorting device according to claim 2, wherein
the container identification unit is a camera that captures an image of the sample container, and
the attribute of the sample container is identified based on a color of a lid of the sample container or a shape of the sample container included in the image captured by the camera.

7. The sample container sorting device according to claim 6, wherein
the holding/lifting mechanism includes a rotation mechanism that rotates the held sample container,
the control unit identifies the attribute of the sample container based on a barcode of the sample container captured by the camera when the sample container has been rotated, and
an error is output in a case where an identification result based on the color of the sample container or the shape of the sample container does not match an identification result based on the barcode.

8. The sample container sorting device according to claim 2, wherein
the container identification unit is a camera that captures an image of the sample container,
the holding/lifting mechanism includes a rotation mechanism that rotates the held sample container, and
the control unit causes the rotation mechanism to rotate the sample container by a predetermined angle after the camera captures a barcode of the sample container, and then detects a liquid amount of the sample based on an image of the sample container captured by the camera.

9. The sample container sorting device according to claim 2, wherein the holding/lifting mechanism executes, with a dual one-way clutch structure, a holding and releasing operation of the sample container and a rotating operation of the held sample container using a common drive source.
